# EUROPEAN PATENT APPLICATION

(11) **EP 4 299 522 A1**
(43) Date of publication of application: **03.01.2024**
(21) Application number: 22182696.9
(22) Date of filing: 01.07.2022
(51) Int. Cl.: C01B 39/02, B01J 29/04, B01J 20/30, B01J 37/00

(54) **A PROCESS FOR THE PRODUCTION OF A ZEOLITE BODY**

(71) Applicant: Immaterial Ltd, Cambridge CB4 0FW (GB)
(72) Inventor: WEE, Lik Hong, Cambridge (GB); FAIREN-JIMENEZ, David, Cambridge (GB)
(74) Representative: Patent Boutique LLP

(57) **Abstract**

The present invention relates to a process for the production of a zeolite body.

## Description

### Field of the invention

The present invention relates to a process for the production of a zeolite body.

### Background of the invention

The present invention provides the industrially relevant production of robust and high-performance zeolite bodies. The term "industrially relevant" refers to processes that would be capable of producing multi-kilo quantities of zeolite bodies per day using equipment which is cost-effective and readily available. Lab-based making protocols and procedures using e.g., beakers and test tubes making gram quantity samples are thus typically not industrially relevant.

Zeolites are sorbent inorganic crystalline materials that are used to adsorb gases or other species or in many catalytic processes. Zeolites are used either as substrates for many catalysts or act as catalysts themselves. Zeolite bodies can be cation-exchanged or impregnated with metal species, such as metal oxides. The porosity of a zeolite body is obviously important for the body to be able to act as a catalyst or sorbent body. If the zeolite body is not porous enough, reagents cannot access the active catalyst sites. If the body has too many large pores, the volumetric performance will be lowered and unwanted reactants can access the core of the zeolite body. Control of zeolite body pore size and level of porosity is clearly important. Zeolites of interest include aluminosilicate zeolites having the chemical formula NaₙAlₙSi₉₆₋ₙO₁₉₂·16H₂O (0<n<27). Aluminosilicate zeolites having this chemical formula include the widely used catalytic zeolite known commercially as Zeolite Socony Mobil-5 or ZSM-5. Other useful zeolites also include Type A, zeolite beta, titanium Silicate-1, faujasite (Types X and Y), chabazite (SSZ-13 and SAPO-34), ferrierite, sodalite and mordenite.

Zeolites are typically synthesised as fine powders, typically having a mean particle size between 2 and 10 microns. They are typically made by a sol-gel process followed by filtration and washing steps and then drying. Typical zeolite crystal sizes are large enough for filtration and washing steps to be industrially viable.

Zeolites are widely used as heterogeneous solid catalysts and as support media for other catalytic materials. When used as such, typically in "packed beds", the fine zeolite powders need to be shaped into larger bodies, such as granules having a maximum internal diameter of greater than 100 microns or even multi-millimetre sized bodies such as extrudates. This shaping of zeolite powders into larger bodies improves handleability and helps to avoid excessive pressure drops and problems such as "channelling" that may often occur when fine powders are used. The use of larger zeolite bodies improves fluid flow, which serves to improve both mass and heat transfer properties under typical industrial process conditions. The zeolite bodies need to be robust enough to survive the conditions of making and use, especially high temperatures and agitation from fluid flows.

Robustness and strength are important requirements for such zeolite bodies. Many industrial processes use such zeolite bodies in large "packed beds" and continuously flow a fluid, whether liquid or gas, through the packed bed to contact the reactants with the zeolite bodies. The fluid may subject the zeolite catalyst bodies to movement and attrition, generating dust. A build-up of this fine dusty material may block equipment and is one of the principal factors limiting the useful lifespan of such zeolite bodies.

Zeolite powders are not self-binding; therefore they need to be shaped into mechanically stable larger bodies of different sizes and shapes. Very typically this requires the use of a binder material at some stage in the process. The binder may be required to provide strength for the "green" article before any drying and/or calcination step and/or strength to the final formed body. In this context, "green" refers to a body before it has been subjected to any subsequent calcination step. Organic binders may be burnt off during a calcination step if the body then retains sufficient strength, eg due to sintering. The binder may stay in the zeolite body after forming or it may be chemically converted into another species in-situ. Binders can be organic materials (e.g., organic polymers) or inorganic materials such as alumina, silicates or clays and mixtures thereof. Typically in the art, inorganic binder levels of from 15 wt% to 30 wt% or higher are required to provide sufficient strength and attrition resistance for large-scale extended use.

An additional level of complexity with many zeolites is that they are built around a "template" molecule or "structure-directing agent" so as to have a specific size and pore size and shape. These templates are organic molecules and have to be removed from the zeolite for it to have functionality. This is typically done by calcining the zeolites after synthesis at temperatures greater than 500 °C so as to burn off the template. Obviously, this will also remove any other organic materials present. This does not mean that organic binders cannot be used to help provide green strength. Some processes use an organic binder during initial processing and rely on sintering of the zeolite particles during calcination to provide robust bodies.

Such processes inevitably introduce larger macro-pores from the burnt-off binder which can result in bodies having lower densities and non-optimum porosity profiles. The use of binders such as alumina or boehmite, especially at the relatively high levels that can be required for providing adequate robustness, can also negatively influence parameters such as overall zeolite level, the porosity profile and the chemical behaviour (e.g., the Bronsted acidity) of the zeolite bodies. This can happen even if binders such as silica, alumina, and metakaolin are subsequently converted into a zeolite by post hydrothermal treatment or dry-gel conversion (the so-called "binderless" zeolite bodies) as it is very likely impossible to transform 100 % the amorphous metakaolin into the crystalline zeolite, resulting to low microporosity Typically, such "binderless" zeolites will not be the same zeolite as that being made into the zeolite body. Additionally, or alternatively, the use of relatively high levels of binders may also result in other negative effects, such as blocking the entrance of the zeolite pores, especially at the pore opening of the catalysts (causing poorer mass transfer), effect lower catalytic selectivity and undesired chemical reactions, such as coke formation, and combinations thereof.

The pore size distribution of a zeolite body can affect catalytic selectivity and lifespan. In particular, controlling and limiting the proportion of larger pores can help control the chemical species which are able to reach the active catalytic sites. Larger pores e.g. mesopore or macropore, are helpful in allowing reactant access to the catalytic sites located within the intrinsic micropores of the zeolite crystals. However, larger pores, especially macropores, can also allow excessively easy access to and from materials, including undesirable chemical species, such as unwanted by-products, from the catalytic sites. This increases the chances of unwanted reactions happening. In particular, micropores are often linked with the problem of "coking" where carbon deposits build up over time within the zeolite body and limit performance and catalyst lifetime.

All current zeolite bodies are therefore complex compromises between competing and sometimes mutually contradictory requirements. The use of binders in forming such bodies is necessary but undesirable as there are always negatives associated with the use of any kind of binder. An ideal zeolite catalyst body may be one that combines relatively high robustness, high density, high surface area, high catalytic activity and selective, and hierarchical porosity without excessive macroporosity, all in a single zeolite body. These requirements are often contradictory.

There is therefore a constant need to develop improved zeolite bodies and improved production processes to produce such bodies, especially robust bodies that require only low levels of binder, or even no binder at all, throughout the forming process. The inventors have discovered that zeolite bodies having improved properties can be made from reaction mixes comprising sub-micron zeolite crystallites if the reaction mixes are dried in a controlled manner avoiding powder production and then formed into bodies followed by calcination. Compared to conventional zeolite production, the small zeolite particles allow tighter packing in the zeolite body (this increases density and reduces macro pores), reduce or even eliminate the need for binder materials and increase the robustness of the final zeolite body.

For an extrusion, or any other zeolite body-making, process to be industrially relevant, it has to be able to make handleable extrudates/bodies at industrially relevant rates using extant equipment. Much of the published art on the extrusion (or other particle formation steps) of zeolites describes work that has been done on a small scale, for example in a laboratory. Mixes containing zeolite powder plus a plasticiser/lubricant liquid are typically made into extrudate strands which are allowed to dry and are then cut up and typically dried and calcined. The required physical properties of the mix being extruded or otherwise formed into bodies to enable industrially relevant processing at scale are rarely described in the art.

However, successful post-extrusion or general post-production handling of the formed zeolite bodies is crucial to any larger-scale production rate.

For extrusion processes, the extruded strands need to be broken or cut into smaller lengths ("extrudates"). This can be done by mechanical cutting or by relying on the breakage of longer extrudates during extrusion and subsequent handling. Extrudates are often formed by the mechanical cutting of extrudate strands using a die face-cutter or use of the natural breakage of the strands during subsequent handling. The extrudates are typically cut by a rotating blade moving across the surface of the die-plate. This means that the extrudates can be easily cut to a consistent length, which can be controlled by the rotational speed of the cutter tool.

For an extrudate-cutting process, or any body-forming process based on a cutting or milling action, to work, the material should not stick to any blade/tool used to break or cut the material. If significant amounts of material do stick to the cutting blade/tool, this will rapidly result in the build-up of material on the cutting tool resulting in the production of large masses of material rather than discrete extrudates or bodies. The bodies, e.g., extrudates, also need to not stick to each other or equipment sides immediately after cutting or breaking. This is often a major problem with extrusion cutting processes due to the concentration of extrudes in a small space leading to frequent extrudate: extrudate impacts. If the extrudates or bodies are too soft and /or sticky, they can stick to each other after impact. Also, if the extruded strands are too soft or sticky, then processes which rely on mechanical breakage of the extrudate strands just do not work.

The issue of not having material sticking to a cutting tool/blade applies to material in other forms apart from extrudates, such as flakes, slabs, tablets or other larger bodies or masses. Extrudates are a very convenient form, but being able to cut or otherwise break other larger bodies, such as larger zeolite masses formed by tray-drying, into smaller zeolite bodies of industrial relevance by the use of e.g., a flaker or other cutting tool is also of industrial relevance. The formation of smaller zeolite bodies is often followed by optional, but preferred, further process steps such as rounding in a spheroniser and/or controlled drying.

The zeolite bodies are then typically calcined to remove any residual template molecules from within the pores.

Thus it can be seen that successful, large-scale production of suitable zeolite bodies by extrusion, or other particle-forming processes, requires the zeolite mix being processed to have specific physical properties. Any mix cannot be too soft when being cut or broken else it will stick either to itself or to the sides of equipment or to the cutting tools, rapidly leading to the process not being viable. If the mix is too hard, it can be difficult to extrude.

For clarity, the term "zeolite body" describes a body, such as an extrudate, wherein the majority of the body (i.e., > 50 wt%) comprises one or more zeolites. The zeolite bodies of the present invention can also contain catalytic species. Typically, these catalytic materials are present at very low levels and can be incorporated into the zeolite body either in the reaction mix or in a post-formation chemical modification step.

The inventors have discovered that optimised zeolite bodies are formed when the zeolite particles/crystallites in the reaction mix used to form the zeolite body are of small size. Suitable sizes include zeolite crystallites having a dso of less than 1 micron, or less than 900 nm or less than 800nm or less than 600nm or less than 400nm or even less than 200nm or most preferably less than 100nm.

It is not industrially practical to separate such small crystallites by filtration in the same way that larger zeolite particles can be. Separating, washing and concentrating zeolite particles/crystallites from reaction mixes is commonly done in the lab by use of a high-speed centrifuge. This could be done for small zeolite crystallites but is not industrially practical on a large scale due to the cost and complexity of high-speed centrifugation.

It is preferred that the zeolite reaction mixes containing these small zeolite particles/crystallites do not undergo a powder-forming drying step, such as flash-drying or spray-drying, to remove the water before being formed into larger zeolite bodies. Rapid drying processes produce zeolite powders. Production of a zeolite powder would typically then require the use of high levels of binders to make robust zeolite bodies, with the negatives that entails. In addition, such a rapid drying step will typically aggregate the small zeolite particles into larger, porous powder particles that will possess low mechanical stability and bulk density in any resulting zeolite body.

In the inventive process, the zeolite reaction mix comprising the small zeolite particles/crystallites is typically concentrated by the controlled (and slower) removal of water to form a mass of solid-like or highly viscous paste-like or gel-like material, rather than a powder, before being formed into smaller zeolite bodies. Such solid-like or highly viscous paste-like masses are referred to as *"partially dried"* zeolite masses. Typically, the zeolite crystallites in the reaction mix are not subjected to a washing step before being formed into the zeolite body. Instead, the zeolite body is typically washed after being formed to remove impurities. This simplifies processing. Typically, smaller zeolite particles/crystallites allow tighter packing and density in the final zeolite body.

The addition of an adsorbent binder powder into the partially dried zeolite mass can typically assist the formation of the subsequent zeolite bodies, such as by increasing the viscosity of the partially dried zeolite mass so as to make the partially dried zeolite mass extrudable without issues or otherwise easier to form into smaller bodies. Suitable binders can be selected from silicas, aluminas, aluminosilicates including zeolites and clays. Preferably the adsorbent binder powder is silica. Silicas can also act as binders that enhance the strength of the final zeolite body. Levels of silica can be less than 15wt% of the zeolite body, this helps to avoid issues with high binder levels. Lower levels of silica are preferred such as less than 10wt% or even 5wt% of the zeolite body. Lower levels of binder, compared to the typical art, are enabled by the small size of the zeolite crystallites.

It is also possible to incorporate additional zeolite powder into the partially dried zeolite mass provided levels are limited (eg to < 40wt%, or <30wt%, or <20wt%, or <10wt% of the zeolite body), this helps to avoid some of the negatives of zeolite powders. Preferably the zeolite powder is the same zeolite as formed in the reaction mix. A preferred option is for the adsorbent zeolite powder to comprise recycled zeolite body material, typically after a milling step. It may be preferred for the partially dried zeolite bodies to be size classified and further dried (in any order) after forming and the dried, but off-spec material to be milled. Milling the off-spec material before calcination increases the ease of milling.

Typically, *"partially dried"* zeolite masses retain enough water to be deformable and extrudable but which are solid enough to retain their shape when handled if formed into a shaped body. The *partially dried* zeolite mass is formed into the zeolite bodies by a body-forming step such as extrusion and/or cutting. The zeolite bodies are then subjected to subsequent process steps selected from washing, chemical modification, drying, calcination, and combinations thereof. The drying step can be integrated with the calcination step.

The reaction mix can be dried to form the partially dried zeolite mass by a variety of techniques, typically provided that the formation of zeolite powder is avoided. The reaction mix can be dried by heating to temperatures of less than 100 °C, or less than 90 °C, or less than 80 °C or even less than 70 °C. This can take days for example more than 1 day or 2 days or 3 days or 4 days or even 5 days. The reaction mix can be dried by two or more different techniques. A preferred technique is to concentrate the reaction mix by use of a wiped film evaporator. The concentrated reaction mix coming from the wiped film evaporator can be the partially dried zeolite mass, especially if sufficiently dried, or it can be further dried, eg by slow tray drying, to form the partially dried zeolite mass, or it can be combined with adsorbent material, such as silica, to form the partially dried zeolite mass. Typically, the partially dried zeolite mass will retain some "free" water but it is possible for the partially dried zeolite mass to not have a measurable level of free water. "Free" water refers to that fraction of water which can be removed from a material by drying at 35 °C for 5.0 hours. Free water is not tightly bound to a species and can affect the rheology of the zeolite mass. For example, water that is incorporated into the zeolite crystal structure is not regarded as free water. When measuring free water levels, sample sizes of between 1.0g - 2.0g are commonly used.

Controlling the physical properties of the *partially dried* zeolite mass, for example by controlling the level of free water in the *partially dried* zeolite mass, enables industrially relevant processes such as extrusion/spheronisation to be successfully used. If the free water level is too high, the zeolite mass will be too soft to process into zeolite bodies. The level of free water in a zeolite mass can also characterised by the *water activity* of the mass as well as the weight loss. The water activity of a material at a given temperature is defined as the ratio of the humidity of air in equilibrium with the sample at that temperature to the saturated humidity of air at that temperature. The greater the level of free water, the greater the water activity. Thus it is also possible to define an upper level of water activity for a material to be processable.

Calcining the partially dried zeolite bodies, typically to remove any template material, increases their strength. The small particle size of the zeolite crystallites enhances the sintering effect of the calcination step.

### Summary of the invention

The present invention provides a process for the production of a zeolite body, wherein the process comprises the steps of:
(a) forming a zeolite reaction mix, wherein the zeolite reaction mix comprises:
   (i) zeolite crystallites of sub-micron size; and
   (ii) water;
(b) removing at least some of the water from the reaction mix to form a partially dried zeolite mass;
(c) extruding and/or cutting the partially dried zeolite mass to form partially dried zeolite bodies;
(d) subjecting the partially dried zeolite bodies to one or more further process steps selected from a rounding step, a drying step, a size-classification step and any combination thereof;
(e) heating the partially dried zeolite bodies to temperatures of greater than 400 °C to form calcined zeolite bodies;
(f) contacting the calcined zeolite bodies with water to form water-exchanged zeolite bodies;
(g) subjecting the washed zeolite bodies to a cation-exchange step to form cation-exchanged zeolite bodies; and
(h) heating the cation-exchanged zeolite bodies to temperatures of greater than 200 °C to form zeolite bodies.

Step (e) will typically remove any template material from the calcined zeolite body. Step (e) can be done at temperatures greater than 400 °C or greater than 500 °C, such as 550 °C. Step (h) can be done at temperatures greater than 200 °C such as 250 °C or 300 °C or 350 °C or 400°C or 450 °C or 500 °C or 550 °C or even higher.

It may be highly preferred to include adsorbent binder powder into the partially dried zeolite mass either during or after step (b) so as to improve step (c). This can simplify step (b), e.g., by reducing the amount of water that needs to be removed.

The partially dried zeolite mass is typically formed into partially dried zeolite bodies, such as extrudates of pre-determined length. They are then typically subjected to one or more further processing steps, such as drying, size classification and/or spheronisation. The partially dried zeolite bodies may also be further dried in a secondary drying step. The partially dried zeolite bodies are calcined to form calcined zeolite bodies. Preferably, any drying steps, typically step (b) and/or step (d), are carried out under controlled and limited conditions, such as less than 100 °C or less than 70 °C or even less than 50 °C. It may be preferred when the water level in step (b) and/or step (d) is greater than 70wt%, then the drying steps are carried out at a temperature of 100°C or greater than 100°C. It may also be preferred when the water level in step (b) and/or step (d) is 70wt% or less than 70wt%, then the drying steps are carried out at a temperature of less than 100 °C or less than 70 °C or even less than 50 °C. It may be preferred to manage the drying temperatures in the above manner as the material dries and the water level reduces in step (b) and/or step (d).

Higher temperatures may be used, such as initially, when water levels in the reaction mix are high but need to be reduced as the reaction mix begins to solidify. Controlled drying of the partially dried zeolite masses and zeolite bodies is believed to be important to control the macro and meso porosity of the partially dried zeolite bodies. The more rapid the drying, the more larger-scale porosity is introduced into the resulting body. If the drying is too rapid, the zeolite masses or bodies can even fragment. Any secondary drying step can also be combined with the calcination step.

### Detailed description of the invention

**Process for the production of a zeolite body.** The process comprises the steps of:
(a) forming a zeolite reaction mix, wherein the zeolite reaction mix comprises:
   (i) zeolite crystallites of sub-micron size;
   (ii) water;
(b) removing at least some of the water from the reaction mix to form a partially dried zeolite mass;
(c) extruding and/or cutting the partially dried zeolite mass to form partially dried zeolite bodies;
(d) subjecting the partially dried zeolite bodies to one or more further process steps selected from a rounding step, a drying step, a size-classification step and combinations thereof;
(e) heating the partially dried zeolite bodies to temperatures of greater than 400 °C to form calcined zeolite bodies;
(f) contacting the calcined zeolite bodies with water to form water-exchanged zeolite bodies;
(g) subjecting the washed zeolite bodies to a cation-exchange step to form cation-exchanged zeolite bodies; and
(h) heating the cation-exchanged zeolite bodies to temperatures of greater than 200 °C or 300 °C or 400 °C to form zeolite bodies.

The present invention provides a process for the production of high-performing zeolite bodies from zeolite reaction mixes comprising sub-micron zeolite crystallites. The zeolite reaction mix is concentrated by a controlled water drying step to form a partially dried zeolite mass. This has the form of a solid mass or a highly viscous paste mass rather than powder. Adsorbent binder powder can be incorporated into the partially dried zeolite mass. A preferred process is to add a low level of an adsorbent powder, preferably silica, alumina, aluminosilicates or clay, to the partially dried zeolite mass. This can aid in the formation of the partially dried zeolite bodies by increasing their green strength and/or the ease of cutting the partially dried zeolite mass.

The partially dried zeolite mass is then formed into partially dried zeolite bodies by an extrusion and/or cutting process. The partially dried zeolite bodies are then typically subjected to one or more further process steps selected from size classification, spheronisation, drying and combinations thereof before being calcined. The calcined zeolite bodies then undergo a washing step and, very typically, a cation-exchange step to remove unwanted cations such as sodium. They are then subjected to a further high-temperature treatment step to form the final zeolite bodies.

Zeolite powder can also be incorporated into the partially dried zeolite mass. The zeolite powder could be the same zeolite or different to the zeolite forming the partially dried zeolite mass. Preferably the zeolite powder is recycled material from later in the process.

The inventive process is believed to allow a lower level of binder material (such as less than 15wt% of the zeolite body) to be used which minimises the negatives discussed earlier.

**Step (a). Forming a zeolite reaction mix.** Step (a) forms a zeolite reaction mix.

Preferably, step (a) is carried out by:
(i) contacting together:
   (a) zeolite precursor materials; and,
   (b) water,
so as to form a dilute reaction mixture, wherein the dilute reaction mixture comprises:
(a) zeolite particles/crystallites of sub-micron size; and
(b) water;

By sub-micron size, it is meant that the zeolite crystallites have a sub-micron dso mean particle size. Preferably the crystallites have a weight average mean particle size of from 10 nm to 1000 nm, or from 10 nm to 800 nm, or from 12 nm to 700 nm, or from 15 nm to 500 nm or 20 nm to 300 nm or 25 nm to 150 nm. Small crystallites typically increase particle packing in the zeolite bodies to give higher body densities and increase the level of particle:particle sintering during the calcination step. The method of measuring particle size is described in more detail below. The particle size of the zeolite crystallites is typically measured in the reaction mix using Dynamic Light Scattering but can alo be measured in the final zeolite body using SAXS techniques. The particle size of the zeolite crystallites can be controlled by varying the concentration of the reactants, the temperature of the reaction mix and the time of the reaction. Preferably the reaction is carried out at lower temperatures, such as less than 80 °C or less than 70 °C over a period of multiple days. Typically the precursor materials comprise "template" molecules which drive the structure and pore size of the zeolite.

**Step (b). Forming a partially dried zeolite mass.** Step (b) removes water from the zeolite reaction mix to form a partially dried zeolite mass.

Step (b) can be achieved in multiple ways. Preferably, the exact process conditions are not critical. Preferably, the partially dried zeolite mass is not a particle. Typically, the partially dried zeolite mass is a highly viscous paste-like mass. The partially dried zeolite mass can be a monolithic mass, typically having a weight average particle size of greater than 10 microns, or greater than 100 microns, or even greater than 500 microns, or even greater than 1.0cm. Without wishing to be bound by theory, it is believed that controlling (such as by increasing and/or decreasing) the rate at which water is removed (such as by controlling the drying temperature) can avoid the formation of powder material. This could be done in a wiped film evaporator and the resulting partially dried zeolite mass then formed into smaller partially dried zeolite bodies. Suitable equipment includes the D-Velpac Evaporator from LCI Corporation. The zeolite reaction mix could be allowed to dry over an extended period under moderate temperatures, for example whilst spread over flat surfaces or in the reaction vessel, to form the partially dried zeolite mass followed by a forming step, such as being cut in a cutting mill or flaker or other suitable cutting equipment. The drying time can be greater than 48 hours at a drying temperature of less than 70°C, or less than 65°C, or even less than 60°C.

Adsorbent binder powder can be added to the partially dried zeolite mass either during or after drying. This process combination may offer process advantages such as limiting the amount of water needing to be removed (which can simplify processing) whilst enabling the partially dried zeolite mass to be more easily formed into the smaller partially dried zeolite bodies.

Step (b) can happen in different unit operations, for example, removal of some water in a wiped film evaporator followed by addition of adsorbent binder powder in a mixer or extruder. The mixing of the partially dried zeolite mass with the binder powder can happen in the same extruder as being used to form extrudates or it can happen in separate equipment. One option could be to mix the adsorbent binder powder with the partially dried zeolite mass followed by extrusion or smaller body formation. Suitable equipment includes the Z Sigma Blade Extruder Mixer from Winkworth Machinery Ltd.

Suitable silicas for use as the additional adsorbent material are precipitated or fumed silicas, preferably fumed silicas or silica suspensions. Suitable fumed silica includes the Cab-O-Sil^{®} M-5 from Inoxia . Suitable precipitated silicas include the Sipernat range from Evonik.

Typically, the partially dried zeolite mass prior to forming the partially dried zeolite bodies has a viscosity of at least > 4.0 × 10⁵ mPa.s at 10 s⁻¹ and 25 °C. One preferred embodiment is for the partially dried zeolite mass to be deformable under pressure and impact so it can be rounded, eg in a spheroniser. It may be preferred for the partially dried zeolite mass to be sufficiently dry and hard that it can be milled in a mill to form the zeolite bodies.

**Step (c). Extruding and/or cutting the partially dried zeolite mass to form partially dried zeolite bodies.** Step (c) extrudes and/or cuts the partially dried zeolite mass to form smaller partially dried zeolite bodies. The choice of equipment obviously depends on the end application. Extrusion is preferred for making larger bodies. Suitable equipment includes extruders such as the Caleva Variable Density Extruder. The extrusion step could also be used to incorporate adsorbent binder powder into the partially dried zeolite mass just prior to forming the partially dried zeolite bodies. Cutting/milling equipment such as the Retsch SM Cutting Mill series would be suitable for other applications where small bodies are required.

**Step (d). Subjecting the partially dried zeolite bodies to one or more further process steps selected from a rounding step, a drying step, a size-classification step and combinations thereof.** Following the formation of the partially dried zeolite bodies, typically by extrusion or cutting/milling, the partially dried zeolite bodies are typically not yet suitable for the calcination step. They may be rounded in a spheroniser, or need to be sized before calcination to remove oversize or undersize bodies. Selecting only optimally sized bodies for calcination can make recycling of off-spec material easier. A preferred optimal size is 1.0cm or less than 1.0cm, or from 4.0mm to 1.0cm. It may also be useful to further dry the partially dried zeolite bodies before calcination. Suitable equipment for spheronisation includes spheronisers from Caleva, such as the Caleva S500.

**Step (e). Heating the partially dried zeolite bodies to temperatures of greater than 400 °C to form calcined zeolite bodies.** Step (e) activates the partially dried zeolite body, typically by burning off any template material to form the calcined zeolite body. Step (e) also typically partially sinters particles together to increase the robustness of the final zeolite body. Step (e) is typically done at temperatures greater than 400 °C, such as 500 °C or 550 °C. Typically step (e) maintains the zeolite bodies at an elevated temperature of greater than 500°C for more than 1.0 hour, or more than 2.0 hours, or more than 3.0 hours, or even more than 4.0 hours.

**Step (f). Contacting the calcined zeolite bodies with water to form water-exchanged zeolite bodies.** Step (f) contacts the calcined zeolite bodies with water. This helps remove soluble residual reactants. Typically this is carried out until the wash water in contact with the calcined zeolite bodies has a pH of between 7 to 8.

**Step (g). Subjecting the washed zeolite bodies to a cation-exchange step to form cation-exchanged zeolite bodies.** The calcined and washed zeolite bodies are subjected to a cation exchange, typically by contacting the washed zeolite bodies with a solution of ammonium chloride. This exchanges free cations such as sodium with ammonium ions. Suitable ammonium chloride solutions include solutions having concentrations between 0.25M and 5M. Typically, the cation exchange is carried out for at least 1.0 hour, and preferably from at least 1.0 hour to 14 hours. Typically, the cation exchange is carried out at room temperature or an elevated temperature, such as from 60°C to 100°C. Typically the cation-exchanges zeolite bodies are then typically washed. The cation exchange step may be repeated.

**Step (h). Heating the cation-exchanged zeolite bodies to temperatures of greater than** 2**00 °C or 300 °C or 400 °C to form zeolite bodies.** This step typically removes residual water and any ammonium chloride from the cation-exchanged zeolite body to form the finished zeolite body.

**Binder.** Binder may optionally be included in the zeolite mass. Preferably, the binder is silica. When used, the binder is typically added at levels of less than 15 wt % of the zeolite body.

The zeolite bodies can also be subjected to post-synthesis modification steps, such as further ion-exchange steps or impregnation with metal species, selected from one or more of the following: Cu, Ag, Mg, Ca, Sr, Ti, Zr, Hf, Zn, Cd, B, Al, Ga, Sn, Pb, Pt, Pd, Re, Rh, V, P, Zn, Sb, Rb, Li, Cs, Ag, Ba, Cr, Mo, W, Mn, Re, Fe, Co, Ni and noble metals.

**Partially dried zeolite mass.** The partially dried zeolite mass is formed in step (b). Typically, it is important to control the rheology of the partially dried zeolite mass. It is necessary for mixes being cut to be sufficiently "solid-like" if they are to be successfully cut without smearing. One measure of how "solid-like" a material is its viscosity. Typically, it is therefore important for the viscosity of the partially dried zeolite mass to be above a minimum value. Addition of adsorbent material and/or binder to the partially dried zeolite mass can change the rheology of the partially dried zeolite mass and make it more suitable for forming the bodies.

In addition, a preferred option is for the partially dried zeolite bodies to be subjected to a rounding step after cutting or breaking, for example in a spheroniser. Rounding of the partially dried zeolite bodies is preferred as a dust reduction step. However, for the extrudates to be rounded, they need to be sufficiently deformable for this to happen. Preferably, there is an upper limit to the viscosity values of the partially dried zeolite mass if the partially dried zeolite bodies are to be rounded.

Thus, the partially dried zeolite mass in preferred methods of the present invention, typically has a viscosity at 10 s⁻¹ of greater than 3.0 × 10⁵ mPa.s or greater than 4.0 × 10⁵ mPa.s or greater than 5.0 × 10⁵ mPa.s or greater than 6.0 × 10⁵ mPa.s or greater than 7.0 × 10⁵ mPa.s or even greater than 1.0 mPa.s × 10⁶ mPa.s. The preferred viscosity may be chosen based on the nature and design of the cutting and subsequent processing steps. In preferred methods of the present invention, the partially dried zeolite mass typically has a viscosity at 10 s⁻¹ of less than 3.0 × 10⁶ mPa.s or less than 2.0 × 10⁶ mPa.s or less than 1.25 × 10⁶ mPa.s.

**Partially Dried Zeolite Body.** The partially dried zeolite bodies are formed in step (c). The partially dried zeolite bodies undergo further process steps in in step (d). The partially dried zeolite bodies can have a range of shapes and sizes. The partially dried zeolite bodies can be granules, or rounded pellets or larger extrudates. The partially dried zeolite bodies typically have a minimum internal dimension of greater than 100 microns and a maximum internal dimension of less than 10 cm. The term "internal dimension" describes the length of a straight line that is drawn approximately normal from one edge of a body to an edge on the opposing side of the body without crossing any external surfaces. These can be determined by optical microscopy techniques.

**Calcined zeolite body.** The calcined zeolite body is formed in step (e).

**Water and cation exchanged zeolite body.** The water and cation exchanged zeolite bodies are formed in steps (f) and (g).

**Zeolite body.** The zeolite body is formed in step (h). The zeolite body comprises zeolite, and optionally binder, such as silica binder. The silica, if present, is less than 15 wt % of the zeolite body. Typically, the zeolite body has an envelope density of greater than 1.0 g/cm³.

### Test Methods

**Method of measuring viscosity.** Suitable equipment for measuring the viscosity of undried binder mass is an Anton Paar MCR 92 Rheometer with a 25 mm diameter plate, a 25 degree angle cone with a gap of 3.0 mm and measured at 25 °C. A sample of ~ 2g is placed on the plate, the upper cone lowered to the target gap distance, excess sample removed from the sides and the rotational viscosity measured. Typically the viscosity is measured over a range up to a shear rate of 50 s⁻¹. For the purpose of this document, the viscosity of a material is the viscosity measured at 10 s⁻¹.

**Method of measuring water activity.** The water activity of a material is defined as the fractional relative humidity of an atmosphere in equilibrium with that material, i.e., the ratio of the partial pressure of water vapour above the material to that present above pure water at the same temperature. The term "Relative Humidity" (or RH) is used to describe the water in the atmosphere or gas phase which is in equilibrium with the solid, and is expressed as a percentage, with 100% as the Relative Humidity of pure water in a closed system. Thus, for any material, the water activity value (aw) is defined as % RH/100.

Suitable equipment includes the HC2-AW probe connected to a Hygrolab C1 display unit, both from Rotronic Measurement Solutions. Equipment should be properly set-up and operated as per the manufacturers instructions. The RH of a material is measured by placing a sample of the material inside the measurement chamber of the HC2-AW such that > 1/4 of the available volume is filled with sample, sealing the chamber and allowing the measurement to reach equilibrium as indicated on the display.

Unless otherwise specified, water activity measurements are made at 25° C.

**Method for characterising the particle size distribution of particles in a zeolite body by SAXS.** The particle size distribution of the zeolite particles forming the zeolite body can be characterised by SAXS. In principle, in a SAXS experiment, the light is scattered as a result of the contrast in electron density between two phases. Based on this, one can calculate the size of an equivalent spherical particle, or other shapes. The SAXS intensity at a particular angle depends on the electron density contrast. It also depends on the size of the particles. Large particles scatter at low angles and small particles scatter at larger angles. To generate a measurement, pieces of zeolite body are mounted on a sample holder. For SAXS, the X-rays are produced by synchrotron radiation. One or more sets of data are collected to cover the whole range in scattering angle. A Kratky instrument can be used to collect small-angle scattering at the larger scattering angles (1e-1 to 4e-0 degrees). A Bonse Hart instrument can be used to collect small-angle scattering at the smaller scattering angles (2.2e-3 to 5e-1 degrees). In this case, the two datasets are combined into a single scan after background subtraction, and the data are subsequently de-smeared. These de-smeared data are then transformed to a volume size distribution function by the regularization technique. The volume distribution function is the final output of this procedure.

**Measurement of particle size of the zeolite crystallites.** The particle size distribution of the zeolite crystallites when in the reaction mix can be measured by Dynamic Light Scattering. Suitable equipment includes the NANO-flex II from Colloid Metrix operated according to manufacturers instructions. The sample probe can be inserted directly in the reaction mix. Dilution of the reaction mix is usually not required.

### Embodiments of the present invention.

The following are embodiments of the present invention.
1. A process for the production of a zeolite body, wherein the process comprises the steps of:
   (a) forming a zeolite reaction mix, wherein the reaction mix comprises:
      (i) zeolite crystallites having a sub-micron particle size; and
      (ii) water;
   (b) removing water from the zeolite reaction mix to form a partially dried zeolite mass;
   (c) extruding and/or cutting/breaking the partially dried zeolite mass to form a partially dried zeolite body;
   (d) subjecting the partially dried zeolite bodies to at least one further processing step selected from rounding, drying and size classification;
   (e) heating the partially dried zeolite bodies to temperatures greater than 400 °C to form calcined zeolite bodies;
   (f) contacting the calcined zeolite bodies with water to form washed calcined zeolite bodies;
   (g) contacting the washed calcined zeolite bodies with an ammonium ion-containing solution to exchange sodium ions in the zeolite with ammonium ions to form cation-exchanged zeolite bodies; and
   (h) heating the cation exchanged zeolite bodies to temperatures of greater than 200 °C, or greater than 300 °C, such as 400 °C, to form the zeolite bodies.
2. A process according to embodiment 1, wherein step (a) is carried out by:
   (i) contacting together:
      (a) zeolite precursor material; and,
      (b) water,
      so as to form a dilute reaction mixture, wherein the dilute reaction mixture comprises:
      (a) zeolite crystallites of sub-micron size; and
      (b) water.
3. A process according to embodiment 2, wherein the zeolite precursor materials and water are kept at temperatures of less than 100 °C or less than 80 °C or less than 70 °C or less than 60 °C.
4. A process according to any preceding embodiment, wherein step (b) is carried out by drying the reaction mix at temperatures of less than 100 °C or less than 90 °C or less than 80 °C or less than 70 °C or even less than 60 °C.
5. A process according to any preceding embodiment, wherein step (b) is carried out in a wiped film evaporator.
6. A process according to any preceding embodiment wherein adsorbent binder powder is incorporated into the partially dried zeolite mass during any of steps (a), (b) or (c).
7. A process according to embodiment 6, wherein the adsorbent binder powder comprises silica, alumina, aluminosilicates, clays, and combinations thereof.
8. A process according to any preceding embodiment, wherein additional zeolite powder is incorporated into the partially dried zeolite mass.
9. A process according to any preceding embodiment, wherein the zeolite is selected from:
   (i) ZSM-5;
   (ii) Zeolite Type A;
   (iii) Zeolite Beta (aluminosilicate Beta and Sn-Beta);
   (iv) Titanium Silicate-1;
   (v) Faujasite (Types X and Y);
   (vi) Chabazite (SSZ-13, Cu-SSZ-13, Fe-SSZ-13 and SAPO-34);
   (vii) Ferrierite;
   (viii) Sodalite;
   (ix) Mordenite;
   (x) ZSM-11;
   (xi) ZSM-22;
   (xii) ZSM-23;
   (xiii) zeolite L;
   (xiv) MCM-22; and
   (xv) any combination thereof.
10. A process according to any preceding embodiment, wherein step (c) is performed by use of an extruder, and step (d) includes the use of a spheroniser.
11. A process according to any preceding embodiment, wherein the partially dried zeolite mass has a viscosity at 10 s⁻¹ and 25 °C of between 3.0 × 10⁵ mPa.s and 3.0 × 10⁶ mPa.s.
12. A process according to embodiment 6, wherein the level of adsorbent binder powder is less than 15 wt% of the zeolite body.
13. A process according to any preceding embodiment, wherein non-zeolite catalytic species, including metal ions and metal-based nanoparticles are incorporated into the zeolite bodies.
14. Use of a zeolite body made according to any previous embodiment in the catalytic processing of hydrocarbons or alcohols.
15. A process for the production of a zeolite body, wherein the process comprises the steps of:
   (a) forming a zeolite reaction mix, wherein the reaction mix comprises:
      (i) zeolite crystallites having a sub-micron particle size; and
      (ii) water;
   (b) removing water from the zeolite reaction mix to form a partially dried zeolite mass;
   (c) heating the partially dried zeolite mass to temperatures greater than 400 °C remove residual organic material to form calcined zeolite mass;
   (d) cutting/breaking the calcined zeolite mass to form calcined zeolite bodies;
   (e) subjecting the calcined zeolite bodies to at least one further processing step selected from rounding, drying and size classification;
   (f) contacting the calcined zeolite bodies with water to form washed calcined zeolite bodies;
   (g) contacting the washed calcined zeolite bodies with an ammonium ion-containing solution so as to exchange sodium ions in the zeolite with ammonium ions to form cation-exchanged zeolite bodies; and
   (h) heating the cation exchanged zeolite bodies to temperatures greater than 200 °C or greater than 300 °C, such as 400 °C to form zeolite bodies.
16. A process according to any preceding embodiment wherein adsorbent binder powder and/or zeolite powder material is incorporated into the partially dried zeolite mass by use of an extruder or Sigma mixer.
17. A process according to any preceding embodiment, wherein the zeolite bodies have been subjected to a further ion-exchange step and/or an impregnation step so that they have been doped with a metal species selected from the following: Cu, Ag, Mg, Ca, Sr, Ti, Zr, Hf, Zn, Cd, B, Al, Ga, Sn, Pb, Pt, Pd, Re, Rh, V, P, Zn, Sb, Rb, Li, Cs, Ag, Ba, Cr, Mo, W, Mn, Re, Fe, Co, Ni and/or the noble metals.

### Examples

### Preparation of Zeolite Bodies

A zeolite reaction mix was prepared as followed. All raw materials were lab-grade reagents sourced from Sigma-Aldrich.

72 g of 1M tetrapropylammonium hydroxide solution (Sigma-Aldrich) and 60 g of 98% active tetraethyl orthosilicate (Sigma-Aldrich) were mixed at ambient conditions to form Solution 1.

15 g of 1M tetrapropylammonium hydroxide solution (Sigma-Aldrich), 0.21 g of NaOH (Sigma-Aldrich) and 6 g of distilled water were mixed at ambient conditions to form Solution 2.

Al(OH)₃ gel was prepared by the precipitation. 1.05 g of hydrated aluminium sulfate (Al₂(SO₄)₃:18 H₂O) (Sigma-Aldrich) was dissolved in 15 mL of distilled water with 4ml of 25 wt % of ammonia solution. This formed a gel material. The reaction mix was centrifuged at 5000 rpm in a J-15 for 5 minutes followed by washing,. centrifugation and redispersion until the supernatant liquid was at pH 7.4. All of the washed Al(OH)₃ gel was then added slowly to Solution 2 under vigorous stirring. The combined mix of Al(OH)₃ gel and Solution 2 was then added dropwise to Solution 1 under vigorous stirring at ambient conditions to form the zeolite reaction mix.

The reaction mix was kept under sealed conditions at temperatures of less than 70 °C for 5 days to crystallise zeolite crystallites of ZSM-5. The zeolite reaction mix was measured by drying at 100 °C to have a solids content of 27%. The zeolite crystallites had a particle size of less than 100 nm.

The zeolite reaction mix was poured into 60 ml Falcon tubes and slowly dried at 50 °C over five days to form solid partially dried zeolite masses. 5 wt% (based on the zeolite content of the partially dried zeolite mass) of fumed silica (Cab-o-Sil) was then added to each partially dried zeolite mass and stirred in. This made the partially dried zeolite masses much stiffer.

The partially dried zeolite masses were then hand formed into spherical partially dried zeolite bodies.

The partially dried zeolite bodies were then calcined at 550 °C for 6 h with a heating rate of 1°C/min in a muffle oven to form calcined zeolite bodies.

The calcined zeolite bodies were then washed with distilled water until the surrounding water had a pH of 7.3. The water-exchanged zeolite bodies were then cation-exchanged by contacting them with 1 M ammonium chloride solution overnight at 80 °C. This cation-exchanged step was repeated with fresh ammonium chloride solution and the cation-exchanged zeolite bodies were then washed with distilled water again until the pH of the water was 7.6.

The cation-exchanged zeolite bodies were then dried at 50 °C and calcined at 550 °C for 6 h with a heating rate of 1°C/min in a muffle oven to produce the final zeolite bodies. The zeolite bodies were robust and did not form visible dust when subjected to vigorous handshaking in a glass vial. When tested, the zeolite bodies had a BET area of 442 m²/g, which exceeded the performance of the commercial ZSM-5 zeolite pellets and extrudates known to the inventors.

## Claims

1. A process for the production of a zeolite body, wherein the process comprises the steps of:
(a) forming a zeolite reaction mix, wherein the reaction mix comprises:
(i) zeolite crystallites having a sub-micron particle size; and
(ii) water;
(b) removing water from the zeolite reaction mix to form a partially dried zeolite mass;
(c) extruding and/or cutting/breaking the partially dried zeolite mass to form a partially dried zeolite body;
(d) subjecting the partially dried zeolite bodies to at least one further processing step selected from rounding, drying and size classification;
(e) heating the partially dried zeolite bodies to temperatures greater than 400 °C to form calcined zeolite bodies;
(f) contacting the calcined zeolite bodies with water to form washed calcined zeolite bodies;
(g) contacting the washed calcined zeolite bodies with an ammonium ion containing solution so as to exchange sodium ions in the zeolite with ammonium ions to form cation-exchanged zeolite bodies; and
(h) heating the cation-exchanged zeolite bodies to temperatures greater than 200 °C to form zeolite bodies.

2. A process according to claim 1, wherein step (a) is carried out by:
(i) contacting together:
(a) zeolite precursor material; and,
(b) water,
so as to form a dilute reaction mixture, wherein the dilute reaction mixture comprises:
(a) zeolite crystallites of sub-micron size; and
(b) water;

3. A process according to claim 2, wherein the zeolite precursor materials and water are kept at temperatures of less than 100 °C.

4. A process according to any preceding claim, wherein step (b) is carried out by drying the reaction mix at temperatures of less than 100 °C.

5. A process according to any preceding claim, wherein at least part of step (b) is carried out in a wiped film evaporator.

6. A process according to any preceding claim, wherein adsorbent binder powder is incorporated into the partially dried zeolite mass during any of steps (a), (b) or (c).

7. A process according to claim 6, wherein the adsorbent binder powder comprises silica, alumina, aluminosilicates, clays and any combination thereof.

8. A process according to any preceding claim, wherein zeolite powder is incorporated into the partially dried zeolite mass.

9. A process according to any preceding claim, wherein the zeolite is selected from:
(i) ZSM-5;
(ii) Zeolite Type A;
(iii) Zeolite Beta (aluminosilicate Beta and Sn-Beta);
(iv) Titanium Silicate-1;
(v) Faujasite (Types X and Y);
(vi) Chabazite (SSZ-13, Cu-SSZ-13, Fe-SSZ-13 and SAPO-34);
(vii) Ferrierite;
(viii) Sodalite;
(ix) Mordenite;
(x) ZSM-11;
(xi) ZSM-22;
(xii) ZSM-23;
(xiii) zeolite L;
(xiv) MCM-22; and
(xv) any combinations thereof.

10. A process according to any preceding claim, wherein step (c) is performed by use of an extruder and step (d) includes use of a spheroniser.

11. A process according to any preceding claim, wherein the partially dried zeolite mass has a viscosity at 10 s⁻¹ and 25 °C of between 3.0 × 10⁵ mPa.s and 3.0 × 10⁶ mPa.s.

12. A process according to claim 6, wherein the level of adsorbent binder powder is less than 15 wt% of the zeolite body.

13. A process according to any preceding claim, wherein non-zeolite catalytic species, including metal ions and metal-based nanoparticles, are incorporated into the zeolite bodies.

14. Use of a zeolite body made according to any previous claim in the catalytic processing of hydrocarbons or alcohols.
